# FASCICULE DE BREVET EUROPEEN

(11) **EP 1 904 960 B1**
(45) Date de publication et mention de la délivrance du brevet: **23.02.2011**
(21) Numéro de dépôt: 06778867.9
(22) Date de dépôt: 12.07.2006
(51) Int. Cl.: G06K 19/073

(54) **DISPOSITIF DE SECURISATION ACTIVE POUR DISPOSITIF ELECTRONIQUE SANS CONTACT**
EINRICHTUNG ZUR BEREITSTELLUNG AKTIVER SICHERHEIT FÜR EINE KONTAKTFREIE ELEKTRONISCHE EINRICHTUNG
DEVICE FOR PROVIDING ACTIVE SECURITY TO A CONTACT-FREE ELECTRONIC DEVICE

(30) Priorité: 18.07.2005 FR 0507610
(43) Date de publication de la demande: 02.04.2008
(73) Titulaire: OBERTHUR TECHNOLOGIES, 92300 Levallois-Perret (FR)
(72) Inventeur: SERBANESCU, Dan, F-93130 Noisy Le Sec (FR)
(74) Mandataire: Bonnans, Arnaud
(86) Numéro de dépôt international: PCT/FR2006/001700
(87) Numéro de publication internationale: WO 2007/010117

(56) Documents cités:
- WO-A-01/52204
- WO-A-02/09030

## Description

La présente invention concerne la sécurisation active du fonctionnement d'un dispositif électronique sans contact adapté notamment à la technologie de communication sans contact telle que celle décrite dans la norme ISO 14443.

Elle concerne aussi une entité électronique comportant un dispositif électronique sans contact à intégrer à un support, tel qu'un passeport, permis de conduire ou, plus généralement, un document d'identité qu'un porteur peut être amené à présenter lors des contrôles d'identités.

Elle concerne également un document constitué de deux parties formées chacune d'une carte conforme à la norme ISO 7816 et reliées l'une à l'autre de manière flexible par l'un de leurs côtés.

Elle trouve également une application dans le cadre d'un porte-document contenant au moins une carte sans contact.

Elle se rapporte en outre à un procédé empêchant la communication (écriture et/ou lecture) frauduleuse entre une station externe de communication sans contact et un dispositif électronique sans contact.

Elle trouve une application aussi bien dans la technologie de communication sans contact que dans la technologie duale ou hybride, dans laquelle le dispositif électronique sans contact comporte en outre une interface de communication à contact.

Il a déjà été proposé d'intégrer à un document de sécurité, comportant en pratique des données imprimées destinées à permettre un contrôle d'identité, un dispositif électronique sans contact, par exemple un circuit intégré à microprocesseur destiné à communiquer avec l'extérieur au moyen d'une antenne, de manière à permettre un échange d'informations sans contact entre ce document et une station externe de communication sans contact. Typiquement, l'échange de données est réalisée à l'initiative de la station de communication (la station envoie des commandes auxquelles le dispositif électronique sans contact répond).

Un tel document de sécurité permet d'échanger des données plus riches en informations que des caractères imprimés, ou même une photo, telles que des données biométriques et, le cas échéant, vérifier la compatibilité ventre les données imprimées et les données stockées, de sorte a détecter toute tentative de corruption des données imprimées.

Toutefois, ce principe de lecture sans contact des données contenues dans le circuit intégré se heurte à la réticence bien compréhensible que ces données puissent être lues à l'insu du porteur, par des systèmes pouvant être non autorisés.

D'une manière générale, les cartes sans contact fonctionnant par couplage magnétique (norme ISO 14443 ou autres) ne sont pas invulnérables aux actions frauduleuses d'intrusion, appelées encore *skimming* en anglais.

Il est donc souhaitable d'empêcher par des actions physiques l'activation de la carte et la communication libre avec une station. En effet, la communication avec une station externe doit avoir lieu uniquement avec la connaissance du porteur et l'action volontaire de ce dernier. Il convient donc de mettre en place des mesures de type contre-mesure, appelées encore *anti-skimming,* permettant d'éviter la lecture frauduleuse du contenu de la carte.

Une telle contre-mesure est utile dans le domaine des passeports avec données d'identification et données biométriques lisibles par des procédures magnétiques sans contact.

Une telle contre-mesure de protection à l'encontre des intrusions distantes est également souhaitable dans le cadre de cartes sans contact qui, placées par exemple dans un portefeuille, ne doivent pas pouvoir être lues à distance et ne communiquer que lorsqu'elles sont extraites par leur porteur en vue d'être lues.

On connaît déjà plusieurs technologies qui offrent une certaine protection physique par des moyens passifs.

Une première technologie consiste à offrir un blindage total de type cage Faraday. Selon cette technologie, on garde le document ou la carte sans contact dans un étui conducteur formant cage Faraday qui empêche toute communication entre la carte et la station. Pour autoriser la communication, le porteur doit extraire le document de son étui et le présenter à la station. La procédure est efficace mais l'ensemble est relativement encombrant, soumis à l'usure et contraignant en utilisation.

Une deuxième technologie consiste en la modification de la partie du couplage magnétique en lui adjoignant des éléments métalliques mobiles qui perturbent fortement le champ de la station par écran magnétique et par le désaccord du circuit oscillant. Cette deuxième technologie est décrite notamment dans les documents WO 2005/045754, US 6,111,506 et US 6,108,636. En pratique, pour permettre la communication, le porteur éloigne la carte sans contact de l'écran ou de l'enroulement perturbateur, par exemple en ouvrant le passeport.

Toutefois, si la station est plus puissante ou la fermeture du document n'est pas complète, la contre-mesure est insuffisante car il est impossible d'assurer un écrantage suffisant permettant de rendre inopérant la communication entre la carte sans contact et la station.

Une troisième technologie consiste à réaliser un désaccord contrôlé du circuit oscillant de la carte sans contact. Cette troisième technologie, décrite notamment dans le brevet US 6,586,660, consiste à utiliser une carte sans contact dont le circuit oscillant de l'antenne est désaccordé sur une fréquence plus haute que celle de la station. Par exemple, en présentant l'antenne de la carte sans contact à la station en mettant volontairement le pouce sur un endroit précis, on ré-accorde le circuit oscillant et la communication avec la station est rendue possible.

Ce procédé demande un abattement du format ISO de la carte et l'efficacité est déterminée par le positionnement et la taille du doigt.

De plus, la nécessité de tenir la carte avec les doigts dans un endroit précis est contraignante et malcommode. Une autre technologie consiste à prévoir un dispositif brouilleur à proximité du dispositif électronique sans contact pour provoquer une collision avec la modulation de charge engendrée par le dispositif électronique sans contact. Cette technologie est décrite notamment dans des demandes de brevet WO-A-2005/05 ou DE-U-29714999.

La présente invention apporte justement une solution à ces différents problèmes.

D'une manière générale, une station externe de communication sans contact conforme à la norme ISO 14443 est affectée en réception par la présence simultanée de plusieurs dispositifs électroniques sans contact dans le rayon d'activité de la station externe.

On sait que la norme prévoit une procédure anti-collision pour remédier à l'interférence des émissions simultanées des deux ou plusieurs dispositifs électroniques sans contact qui sont présentées à la station externe de communication sans contact. Si les distances et les positions relatives des dispositifs électroniques sans contact permettent l'alimentation de chaque dispositif électronique sans contact, chacun d'eux est prêt à émettre vers la station externe de communication sans contact commune.

Sans l'intervention du protocole anti-collision, les dispositifs électroniques sans contact peuvent émettre simultanément, provoquant des interférences inacceptables en réception.

Ces interférences peuvent empêcher totalement la communication si les deux (ou plusieurs) signaux reçus par la station ont des niveaux relativement proches, car le taux d'erreurs introduites est important. Pour choisir le dispositif électronique sans contact le plus proche, il faut que les différences des niveaux soient assez grandes pour fonctionner sans erreur.

Le protocole anti-collision « donne la parole » à tour de rôle à chaque dispositif électronique sans contact ainsi alimenté. En pratique, le protocole est câblé (implémenté matériellement) sur chaque dispositif électronique sans contact conforme à la norme ISO 14443.

La présente invention exploite de façon surprenante et avantageuse l'effet des collisions des émissions vers la station externe de communication sans contact.

En pratique, la relation entre le dispositif électronique brouilleur et le dispositif électronique sans contact est choisie de telle sorte que lorsque le dispositif électronique brouilleur est à proximité immédiate du dispositif électronique sans contact, ledit dispositif électronique brouilleur rend inopérante la communication entre la station externe de communication sans contact et le dispositif électronique sans contact tandis que lorsque le dispositif électronique brouilleur est éloigné du dispositif électronique sans contact, la communication entre la station externe de communication et le dispositif électronique sans contact est rendue opérante.

Selon une caractéristique, le taux de la modulation de charge engendrée par le dispositif électronique brouilleur est plus élevé que le taux de la modulation de charge engendrée par le dispositif électronique sans contact.

Par exemple, le taux de la modulation de charge engendrée par le dispositif électronique brouilleur est de l'ordre d'au moins 70%.

Selon une réalisation, la modulation de charge engendrée par le dispositif électronique brouilleur est permanente en réponse au champ magnétique rayonné par la station externe de communication sans contact.

Selon une réalisation, les moyens de brouillage comprennent :
- un circuit oscillant accordé de type LC apte à capter par couplage magnétique une tension alternative en présence du champ magnétique créé par l'élément inductif de la station externe de communication sans contact ;
- des moyens de redressement pour transformer la tension alternative ainsi captée en une tension d'alimentation continue ; et
- un circuit oscillateur apte, tant que ladite tension d'alimentation continue ainsi générée dépasse un seuil choisi, à appliquer un signal alternatif aux bornes de moyens de modulation d'amplitude aptes à moduler l'amplitude dudit signal alternatif aux bornes du circuit oscillant.

En pratique, le circuit oscillant comprend une antenne formant une boucle accordée avec un condensateur d'accord et couplée avec l'élément inductif de la station externe de communication sans contact pour engendrer aux bornes de l'antenne une tension d'alimentation alternative induite en présence du champ magnétique créé par l'élément inductif de la station.

Selon une autre réalisation, le circuit oscillateur est de type RC et délivre un signal alternatif à une fréquence d'oscillation choisie.

De leur côté, les moyens de modulation comprennent des moyens de commutation cadencés au rythme de ladite fréquence d'oscillation.

Par exemple, les moyens de commutation comprennent un transistor réalisé en technologie CMOS.

La présente invention a pour objet une entité électronique sans contact de type document ou analogue, comportant un support muni d'au moins des première et seconde parties adaptées à se déplacer l'une par rapport à l'autre et un dispositif électronique sans contact monté dans la première partie du support et comportant un microcircuit électronique et une antenne connectée électriquement audit microcircuit électronique et adaptée à être couplée magnétiquement avec une station externe de communication sans contact.

Selon l'invention, la seconde partie de l'entité est pourvue d'un dispositif électronique brouilleur comprenant des moyens de brouillage actifs aptes, en réponse au champ magnétique rayonné par la station externe de communication externe, à engendrer une modulation de charge susceptible de provoquer une collision avec la modulation de charge engendrée par le dispositif électronique sans contact lorsque celui-ci est disposé par rapport audit dispositif électronique brouilleur selon une relation choisie, ladite collision ainsi provoquée rendant inopérant l'échange d'informations entre la station externe de communication sans contact et le dispositif électronique sans contact.

Les première et seconde parties sont aptes à se déplacer selon un axe de déplacement choisi.

Le document est pliable.

En pratique, le document appartient au groupe formé par des documents de sécurité, des documents d'identité, des passeports, des permis de conduire.

L'invention est définie par la revendication 1.

D'autres caractéristiques et avantages de l'invention apparaîtront à la lumière de la description détaillée ci-après et des dessins dans lesquels :
- la **figure 1** est un schéma équivalent du dispositif électronique brouilleur réalisé en technologie CMOS selon l'invention ;
- la **figure 2** est un chronogramme illustrant le courant dans la boucle d'un dispositif électronique sans contact conforme à la norme ISO 14443 pour un couplage donné avec une station externe de communication ;
- la **figure 3** est un chronogramme illustrant le courant dans la boucle du dispositif électronique brouilleur selon l'invention, pour un couplage identique à la **figure 2** avec la station externe de communication ; et
- la **figure 4** illustre schématiquement un document de sécurité équipé du dispositif électronique brouilleur conforme à l'invention et d'un dispositif électronique sans contact, ledit document étant ouvert et en couplage de proximité avec l'élément inductif d'une station externe de communication sans contact.

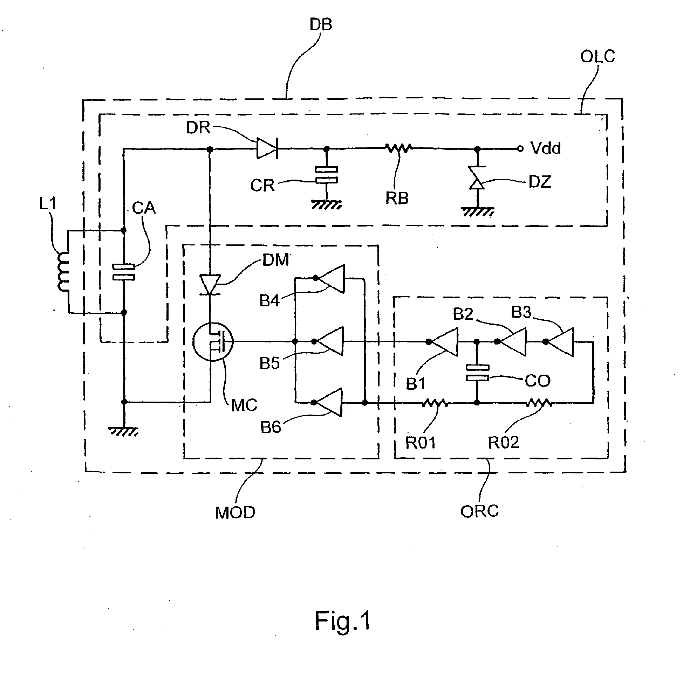

En référence à la **figure 1**, on a représenté le montage complet du dispositif actif de brouillage selon l'invention comportant une antenne extérieure L1 et un circuit intégré DB.

Par exemple, l'antenne L1 est une boucle imprimée ou sérigraphiée sur un support ayant plusieurs spires et une surface choisie.

Par exemple, le dispositif électronique brouilleur DB est intégré sous la forme d'une puce (chip). La puce peut être réalisée en technologie CMOS, Si-bipolaire, ou analogue.

Structurellement, les moyens de brouillage du dispositif électronique brouilleur DB selon l'invention comprennent trois modules principaux.

Le premier module OLC est formé d'une part d'un condensateur d'accord CA pour l'antenne extérieure L1 et, d'autre part, d'éléments pour obtenir une tension d'alimentation continue VDD en présence du champ magnétique créé par l'élément inductif d'une station externe communication sans contact (non représenté).

Le second module comprend un circuit oscillateur ORC qui applique un signal alternatif aux bornes d'entrée de moyens de modulation MOD tant que ladite tension d'alimentation VDD ainsi générée dépasse un seuil choisi.

Le troisième module comprend lesdits moyens de modulation d'amplitude MOD aptes à moduler l'amplitude du signal alternatif aux bornes du circuit oscillant OLC formé par l'antenne L1 et le premier module OLC.

Selon une réalisation, l'antenne boucle L1 est réalisée en circuit imprimé ou sérigraphiée, par exemple, elle est similaire à celle d'une carte sans contact conforme à la norme ISO 14443.

Le circuit oscillant OLC comprend en outre un condensateur d'accord CA accordé avec l'élément inductif L1 pour engendrer aux bornes du circuit OLC une tension d'alimentation alternative induite en présence du champ magnétique créé par l'élément inductif de la station (non représenté). Des moyens de redressement (diode DR) transforment la tension d'alimentation alternative induite en une tension d'alimentation continue VDD.

Pour alimenter les circuits logiques que l'on décrira plus en détail ci-après, la composante continue de la tension d'alimentation VDD est filtrée par un condensateur CR, puis régulée par une diode zener DZ et une résistance de ballast RB.

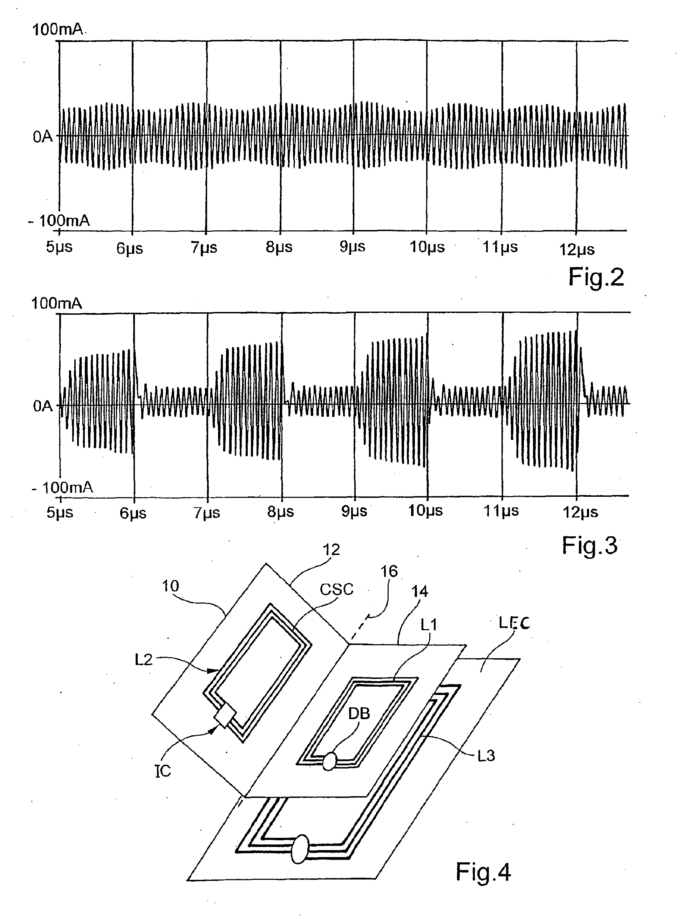

Quand le dispositif électronique brouilleur se trouve à proximité de l'élément inductif L3 (**figure 4**) de la station externe de communication sans contact LEC (**figure 4**), toute la partie logique que l'on décrira plus en détail ci-après est alimentée.

L'ensemble des portes inverseurs 81, B2, B3, reliées par des résistances RO1 et RO2 et le condensateur CO forme un circuit oscillateur ORC de type RC et fournit un signal rectangulaire de rapport cyclique 50%.

La fréquence d'oscillation du circuit oscillateur est déterminée par le produit RC des valeurs du condensateur CO et de la résistance RO1 Par exemple, la fréquence d'oscillation se trouve dans la gamme 300-900 KHz. Cette valeur n'est pas critique pour l'efficacité du brouillage.

Le signal émis par l'oscillateur ORC est appliqué à un séparateur de puissance (buffer) formé par trois portes inverseurs B4, B5, B6 montées en parallèle, pour assurer un régime de commutation (on/off) pour le transistor MC, de type MOS.

Un tel séparateur de puissance B4, B5, B6 assure une attaque et une commutation (on/off) plus franches du transistor MC

Les moyens de modulation MOD comprennent le transistor MC et une diode DM cadencés au rythme du signal alternatif ainsi émis par l'oscillateur ORC.

Quand le transistor MC est mis dans le régime de conduction, le circuit oscillant OLC est amorti fortement par les résistances série très faibles (inférieures à 20 ohms) de conduction du transistor MC et de la diode DM. La diode DM est ici utile pour empêcher l'ouverture de la diode intrinsèque du transistor MC, pendant les alternances négatives du signal alternatif RF reçu par le circuit oscillant.

En référence à la **figure 3**, on obtient une modulation de charge engendrée en réponse à l'alimentation des éléments logiques du dispositif brouilleur conforme à l'invention.

Par exemple, le taux de la modulation de charge engendrée par le dispositif électronique brouilleur DB (**figure 3**) est plus élevé que le taux de la modulation de charge engendrée par le dispositif électronique sans contact CSC (**figure 2**).

Typiquement, le taux de la modulation de charge engendrée par le dispositif électronique brouilleur DB est de l'ordre d'au moins 70%. Bien évidemment d'autre taux peuvent convenir, par exemple, celui de la carte sans contact normalisée à 10%.

En pratique, la modulation de charge engendrée par le dispositif électronique brouilleur DB en réponse au champ magnétique rayonné par la station externe de communication sans contact LEC est permanente. Elle peut aussi être ponctuelle.

Le taux de modulation élevé se manifeste ici par une variation très importante du courant alternatif de porteuse dans le rythme de l'oscillateur ORC.

Pour la station externe de communication sans contact, la partie réceptrice du lecteur démodule le signal correspondant.

Le dispositif bouilleur DB est ainsi apte, en réponse au champ magnétique rayonné par la station externe de communication externe LEC, à engendrer une modulation de charge susceptible de provoquer une collision avec la modulation de charge engendrée par un dispositif électronique sans contact CSC lorsque celui-ci est disposé par rapport audit dispositif électronique brouilleur selon une relation choisie, ladite collision ainsi provoquée rendant inopérant l'échange d'informations entre la station externe de communication sans contact (LEC) et le dispositif électronique sans contact CSC.

Dans l'exemple non limitatif d'un taux de modulation de charge élevé (par exemple 70%, **figure 3**), on voit que la station va démoduler un signal d'amplitude beaucoup plus importante que le signal (**figure 2**) normalement reçu d'un dispositif électronique sans contact conforme à la norme ISO1444 placée dans des conditions similaires (distance et position) que le dispositif électronique brouilleur selon l'invention.

En référence à la **figure 2**, on observe qu'une carte sans contact conforme à la norme IS014443 présente un taux de modulation égal à une valeur normalisée de 10% avec la sous-porteuse de l'élément inductif L3 de la station externe de lecture, par exemple ayant une valeur de 847,5 KHz.

On remarque aussi que le signal moyen du dispositif électronique brouilleur est plus élevé que celui d'une carte sans contact normalisée car sa consommation en composante continue est plus faible que celle nécessaire à l'alimentation de la logique d'une carte sans contact ISO14443.

Le Demandeur a réalisé un dispositif électronique brouilleur dont les résultats sont satisfaisants avec les valeurs numériques suivantes :
- fréquence de lecture de la station externe de 13,56 MHz ;
- élément inductif L1 de 1,7pH (3 spires couvrant toute la surface ISO) ;
- condensateur d'accord CA équivalent à deux capacités en parallèle de 27pFchacune ;
- résistance de ballast RB de 470 ohms ;
- condensateur de filtrage CR de 1,5nF ;
- fréquence d'oscillation dans la gamme 300-900 KHz ;
- transistor MOS vendu sous la référence BSS98/INF ;
- condensateur CO de 100 pF ;
- résistance RO1 de 1 à 20 K ohms ;
- résistance RO2 de 1 à 20 K ohms ;
- diode zener DZ de 4,7 Volts.

En référence à la figure 4, on a représenté une réalisation de l'invention non limitative.

Pour assurer la fonction *anti-skimming* conforme à l'invention, on associe un dispositif électronique sans contact CSC conforme à la norme ISO 14443 avec un dispositif brouilleur DB et on créé deux situations de voisinage des deux dispositifs vis-à-vis d'une station externe de communication LEC.

Par exemple, dans la couverture 12 d'un document 10 est incorporée un dispositif électronique sans contact CSC. Le dispositif électronique sans contact CSC comprend une antenne L2 et un microcircuit IC contenant les données à sécuriser.

Dans l'autre partie 14 du document 10 est incorporé le dispositif brouilleur DB conforme à l'invention tel que décrit en référence à la **figure 1**. Le document est posé ou présenté dans la zone de lecture d'un élément inductif L3 d'une station externe de communication sans contact LEC.

Le document 10 est pliable le long d'un axe de pliage 16 reliant les deux parties 12 et 14.

Si le document est fermé ou ouvert partiellement, l'action de brouillage exercé par le dispositif DB rend la communication impossible.

En revanche, si le document est complètement ouvert, le dispositif brouilleur DB se trouve dans des conditions de couplage réduit et la modulation de charge engendrée par le dispositif brouilleur est beaucoup plus faible ou inexistante si le dispositif brouilleur DB ne s'active pas. Dans cette situation, la communication a lieu normalement.

Une méthode *anti-skimming* conforme à l'invention peut être réalisée également à l'aide d'un dispositif électronique sans contact au format ISO et placé dans un porte-document ou un portefeuille contenant des cartes sans contact. Si le porte-document se trouve dans le champ d'une station, la modulation de charge engendrée par le dispositif brouilleur conforme à l'invention qui ne respecte pas le protocole d'anti-collision va empêcher l'activation des cartes. Pour communiquer volontairement il faut présenter à la station uniquement la carte sans contact contenant les données.

Le procédé de contre mesuré *(ant-skimming)* permet ainsi d'empêcher la communication avec une station sans l'acceptation et l'action volontaire du porteur d'une carte sans contact. En effet, si la carte sans contact contenant les données est associée avec le dispositif brouilleur, pour présenter à la station des conditions de communication relativement similaires, la station va recevoir des réponses qui ont des niveaux qui interfèrent fortement et la communication est impossible. La modulation de charge ainsi engendrée par le dispositif brouilleur (lorsqu'il est alimenté inductivement par la station) empêche l'établissement de la communication entre la station et la carte sans contact contenant les données. Si par une action volontaire du porteur, on éloigne le dispositif brouilleur de la station. Alors, on crée un couplage nettement supérieur pour la carte sans contact ainsi protégée par le dispositif brouilleur conforme à l'invention. Il en résulte que l'action perturbatrice (brouillage) va devenir insignifiante et la communication va pouvoir se dérouler normalement entre la station externe de communication sans contact et le dispositif électronique sans contact (par exemple une carte sans contact).

II est à remarquer que la puissance absolue de la station de communication n'a pas ici d'importance, l'interférence étant ici dépendante uniquement du rapport des signaux reçus par le dispositif électronique brouilleur conforme à l'invention et le dispositif électronique sans contact.

De plus, la présence d'un dispositif brouilleur dans la zone active d'une station n'a pas d'influence nuisible dans le système global, car la station n'a pas de communication avec un tel dispositif brouilleur.

## Revendications

1. Document pliable selon un axe de pliage, comportant un support (10) muni d'au moins des première (12) et seconde (14) parties adaptées à se déplacer l'une par rapport à l'autre selon l'axe de pliage et un dispositif électronique sans contact (CSC) monté dans la première partie (12) du support (10) et comportant un microcircuit électronique (IC) et une antenne (L2) connectée électriquement audit microcircuit électronique (IC) et adaptée à être couplée magnétiquement avec une station externe de communication sans contact (LEC), **caractérisé en ce que** la seconde partie (14) est pourvue d'un dispositif électronique brouilleur (DB) comprenant des moyens de brouillage actifs aptes, en réponse au champ magnétique rayonné par la station externe de communication sans contact (LEC), à engendrer une modulation de charge susceptible de provoquer une collision avec une modulation de charge engendrée par le dispositif électronique sans contact (CSC) lorsque celui-ci est disposé par rapport audit dispositif électronique brouilleur selon une relation choisie, qui corresponde au document fermés ou partiellement ouverts ladite collision ainsi provoquée rendant inopérant l'échange d'informations entre la station externe de communication sans contact (LEC) et le dispositif électronique sans contact (CSC).

2. Document selon la revendication 1, dans lequel la relation entre le dispositif électronique brouilleur (DB) et le dispositif électronique sans contact (CSC) est choisie de telle sorte que lorsque le dispositif électronique brouilleur (DB) est à proximité immédiate du dispositif électronique sans contact (CSC), ledit dispositif électronique brouilleur (DB) rend inopérante la communication entre la station externe de communication sans contact (LEC) et le dispositif électronique sans contact (CSC) tandis que lorsque le document est ouvert, la communication entre la station externe de communication (LEC) et le dispositif électronique sans contact est rendue opérante.

3. Document selon la revendication 1, dans lequel le taux de la modulation de charge engendrée par le dispositif électronique brouilleur est plus élevé que le taux de la modulation de charge engendrée par le dispositif électronique sans contact (CSC).

4. Document selon la revendication 3, dans lequel le taux de la modulation de charge engendrée par le dispositif électronique brouilleur (DB) est de l'ordre d'au moins 70%.

5. Document selon la revendication 1, dans lequel la modulation de charge engendrée par le dispositif électronique brouilleur (DB) est permanente en réponse au champ magnétique rayonné par la station externe de communication sans contact (LEC).

6. Document selon l'une quelconque des revendications 1 à 5, dans lequel les moyens de brouillage actifs comprennent :
- un circuit oscillant (OLC) accordé de type LC apte à capter par couplage magnétique une tension alternative en présence du champ magnétique créé par l'élément inductif (L3) de la station externe de communication sans contact (LEC) ;
- des moyens de redressement (DR) pour transformer la tension alternative ainsi captée en une tension d'alimentation continue (VDD) ; et
- un circuit oscillateur (ORC) apte, tant que ladite tension d'alimentation continue (VDD) ainsi générée dépasse un seuil choisi, à appliquer un signal alternatif aux bornes de moyens de modulation d'amplitude (MOD) aptes à moduler l'amplitude dudit signal alternatif aux bornes du circuit oscillant (OLC).

7. Document selon la revendication 6, dans lequel le circuit oscillant (OLC) comprend une antenne (L1) formant une boucle accordée avec un condensateur d'accord (CA) et couplée avec l'élément inductif (L3) de la station externe de communication sans contact (LEC) pour engendrer aux bornes de l'antenne (L1) une tension d'alimentation alternative induite en présence du champ magnétique créé par l'élément inductif (L3) de la station (LEC).

8. Document selon la revendication 6, dans lequel le circuit oscillateur (ORC) est de type RC et délivre un signal alternatif à une fréquence d'oscillation choisie.

9. Document selon la revendication 8, dans lequel les moyens de modulation (MOD) comprennent des moyens de commutation (MC) cadencés au rythme de ladite fréquence d'oscillation.

10. Document selon la revendication 9, dans lequel les moyens de commutation (MC) comprennent un transistor réalisé en technologie CMOS.

11. Document selon l'une quelconque des revendications 1 à 10, dans lequel le document appartient au groupe formé par des documents de sécurité, des documents d'identité, des passeports, des permis de conduire.

## Claims

1. Document which folds along a fold line, including a support (10) having at least a first portion (12) and a second portion (14) adapted to move one relative to the other along the fold line and a contact-free electronic device (CSC) mounted in the first portion (12) of the support (10) and including an electronic microcircuit (IC) and an antenna (L2) electrically connected to said electronic microcircuit (IC) and adapted to be coupled magnetically with an external contact-free communication station (LEC), **characterised in that** the second portion (14) has a jammer electronic device (DB) comprising active jamming means adapted, in response to the magnetic field radiated by the external contact-free communication station (LEC), to generate a load modulation liable to cause a collision with a load modulation generated by the contact-free electronic device (CSC) when it is placed in a chosen relationship which corresponds to the closed or partly open document, relative to said jammer electronic device, said collision caused in this way rendering inoperative the exchange of information between the external contactless communication station (LEC) and the contact-free electronic device (CSC).

2. Document according to claim 1, wherein the relationship between the jammer electronic device (DB) and the contact-free electronic device (CSC) is chosen so that when the jammer electronic device (DB) is in the immediate vicinity of the contact-free electronic device (CSC), said rammer electronic device (DB) renders inoperative communication between the external contact-free communication station (LEC) and the contact-free electronic device (CSC), whereas when the document is open, communication between the external communication
station (LEC) and the contact-free electronic device is rendered operative.

3. Document according to claim 1, wherein the load modulation rate generated by the jammer electronic device is higher than the load modulation rate generated by the contact-free electronic device (CSC).

4. Document according to claim 3, wherein the load modulation rate generated by the jammer electronic device (DB) is of the order of at least 70%.

5. Document according to claim 1, wherein the load modulation generated by the jammer electronic device (DB) in response to the magnetic field radiated by the external contact-free communication station (LEC) is permanent.

6. Document according to any one of claims 1 to 5, wherein the active jamming means comprise:
- an LC type tuned oscillatory circuit (OLC) adapted to pick up by magnetic coupling an alternating voltage in the presence of the magnetic field created by the inductive component (L3) of the external contact-free communication station (LEC);
- rectifies means (DR) for transforming the alternating voltage captured in this way into a DC supply voltage (VDD); and
- an oscillator circuit (ORC) adapted, if said DC power supply voltage (VDD) generated in this way exceeds a chosen threshold, to apply an alternating signal to the terminals of amplitude modulation means (MOD) adapted to modulate the amplitude of said alternating signals at the terminals of the oscillatory circuit (OLC).

7. Document according to claim 6, wherein the oscillatory circuit (OLC) comprises an antenna (L1) forming a loop tuned with a tuning capacitor (CA) and coupled to the inductive component (L3) of the external contact-free communication station (LEC) to generate at the terminals of the antenna (L1) an induced alternating supply voltage in the presence of the magnetic field created by the inductive component (L3) of the station (LEC) .

8. Document according to claim 6, wherein the oscillator circuit (ORC) is of the RC type and delivers an alternating signal at a chosen oscillation frequency.

9. Document according to claim 8, wherein the modulation means (MOD) comprise switching means (MC) clocked at said oscillation frequency.

10. Document according to claim 9, wherein the switching means (MC) comprise a CMOS transistor.

11. Document according to any one of claims 1 to 10, wherein the document belongs to a group formed by security documents, identity documents, passports, driver's licences.

## Patentansprüche

1. Dokument, das entlang einer Faltachse faltbar ist, umfassend einen Träger (10), der mit mindestens einem ersten (12) und zweiten (14) Teil ausgestattet ist, die angepasst sind, um sich zueinander entlang der Faltachse zu bewegen, und eine kontaktfreie elektronische Einrichtung (CSC), die im ersten Teil (12) des Trägers (10) befestigt ist und eine elektronische Mikroschaltung (IC) und eine Antenne (L2) umfasst, die mit der elektronischen Mikroschaltung (IC) elektrisch verbunden und angepasst ist, um mit einer kontaktfreien externen Kommunikationsstation (LEC) magnetisch verkoppelt zu werden, **dadurch gekennzeichnet, dass** der zweite Teil (14) mit einer elektronischen Störeinrichtung (DB) versehen ist, die aktive Störmittel umfasst, die imstande sind, um in Antwort auf das magnetische Feld, das von der kontaktfreien externen Kommunikationsstation (LEC) ausstrahlt, eine Lastmodulation zu veranlassen, die geeignet ist, eine Kollision mit einer Lastmodulation hervorzurufen, die von der kontaktfreien elektronischen Einrichtung (CSC) veranlasst wird, wenn diese in Bezug auf die elektronische Störeinrichtung gemäß einem festgelegten Verhältnis, das dem geschlossenen oder teilweise geöffnetem Dokument entspricht, angeordnet ist, wobei die so hervorgerufene Kollision den Informationsaustausch zwischen der kontaktfreien externen Kommunikationsstation (LEC) und der kontaktfreien elektronischen Einrichtung (CSC) unwirksam macht.

2. Dokument nach Anspruch 1, wobei das Verhältnis zwischen der elektronischen Störeinrichtung (DB) und der kontaktfreien elektronischen Einrichtung (CSC) so festgelegt ist, dass, wenn sich die elektronische Störeinrichtung (DB) in unmittelbarer Nähe der kontaktfreien elektronischen Einrichtung (CSC) befindet, die elektronische Störeinrichtung (DB) die Kommunikation zwischen der kontaktfreien externen Kommunikationsstation (LEC) und der kontaktfreien elektronischen Einrichtung (CSC) unwirksam macht, während, wenn das Dokument geöffnet ist, die Kommunikation zwischen der externen Kommunikationsstation (LEC) und der kontaktfreien elektronischen Einrichtung wirksam gemacht wird.

3. Dokument nach Anspruch 1, wobei die Rate der Lastmodulation, die von der elektronischen Störeinrichtung veranlasst wird, höher ist als die Rate der Lastmodulation, die von der kontaktfreien elektronischen Einrichtung (CSC) veranlasst wird.

4. Dokument nach Anspruch 3, wobei die Rate der Lastmodulation, die von der elektronischen Störeinrichtung (DB) veranlasst wird, mindestens 70 % beträgt.

5. Dokument nach Anspruch 1, wobei die Lastmodulation, die von der elektronischen Störeinrichtung (DB) veranlasst wird, dauerhaft ist, in Antwort auf das magnetische Feld, das von der kontaktfreien externen Kommunikationsstation (LEC) ausstrahlt.

6. Dokument nach einem der Ansprüche 1 bis 5, wobei die aktiven Störmittel Folgendes umfassen:
- einen abgestimmten Schwingkreis (OLC) vom Typ LC, der imstande ist, bei Vorhandensein des magnetischen Feldes, das vom induktiven Element (L3) der kontaktfreien externen Kommunikationsstation (LEC) aufgebaut wird, durch magnetische Kopplung eine Wechselspannung zu empfangen;
- Richtmittel (DR) zum Umwandeln der so empfangenen Wechselspannung in eine Versorgungsgleichspannung (VDD); und
- eine Oszillatorschaltung (ORC), die, solange die so erzeugte Versorgungsgleichspannung (VDD) einen festgelegten Grenzwert überschreitet, imstande ist, ein Wechselsignal an die Klemmen der Mittel zur Amplitudenmodulation (MOD) zu übertragen, die imstande sind, die Amplitude des Wechselsignals an den Klemmen des Schwingkreises (OLC) zu modulieren.

7. Dokument nach Anspruch 6, wobei der Schwingkreis (OLC) eine Antenne (L1) umfasst, die eine Schleife bildet, die mit einem Abstimmkondensator (CA) abgestimmt ist und mit dem induktiven Element (L3) der kontaktfreien externen Kommunikationsstation (LEC) verkoppelt ist, um an den Klemmen der Antenne (L1) eine Versorgungswechselspannung zu veranlassen, die bei Anwesenheit des magnetischen Feldes, das vom induktiven Element (L3) der Station (LEC) aufgebaut wird, induziert wird.

8. Dokument nach Anspruch 6, wobei die Oszillatorschaltung (ORC) vom Typ RC ist und bei einer festgelegten Schwingfrequenz ein Wechselsignal ausgibt.

9. Dokument nach Anspruch 8, wobei die Modulationsmittel (MOD) Schaltmittel (MC) umfassen, die nach dem Rhythmus der Schwingfrequenz getaktet sind.

10. Dokument nach Anspruch 9, wobei die Schaltmittel (MC) einen Transistor umfassen, der in CMOS- Technik hergestellt ist.

11. Dokument nach einem der Ansprüche 1 bis 10, wobei das Dokument zur Gruppe gehört, die von Sicherheitsdokumenten, Identitätsdokumenten, Reisepässen und Führerscheinen gebildet wird.
